(19) Europäisches Patentamt
European Patent Office
Office européen des brevets

(11) **EP 4 235 698 A2**

(12) **EUROPEAN PATENT APPLICATION**

(43) Date of publication:
**30.08.2023 Bulletin 2023/35**

(21) Application number: **23178211.1**

(22) Date of filing: **14.04.2020**

(51) International Patent Classification (IPC):
**G21D 3/00** *(2006.01)*

(52) Cooperative Patent Classification (CPC):
**G21D 3/001; G21C 3/326; G21C 17/022;**
Y02E 30/00; Y02E 30/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**20169335.5 / 3 896 703**

(71) Applicant: **Westinghouse Electric Sweden AB
721 63 Västerås (SE)**

(72) Inventors:
• **LE CORRE, Jean-Marie
Uppsala (SE)**

• **PRASSER, Horst-Michael
Nussbaumen (CH)**
• **ROBERS, Lukas
Wolfhausen (CH)**

(74) Representative: **Bjerkén Hynell KB
Tulegatan 53
113 53 Stockholm (SE)**

Remarks:
This application was filed on 08-06-2023 as a
divisional application to the application mentioned
under INID code 62.

(54) **COMPUTER-BASED SIMULATION METHODS FOR BOILING WATER REACTORS (BWR)**

(57)    A computer-implemented simulation method, based on a sub-channel approach of predicting local mass fluxes of vapour and liquid in coolant water anywhere along fuel rods within any fuel assembly mechanical design of a Boiling Water Reactor, (BWR), for given steady-state or transient boundary conditions, the sub-channel approach is based on the solution of mass, momentum and energy conservation equations for the vapour phase and the liquid phase, the liquid phase is represented by more than one field variable, and is specifically represented by three fields, with the vapour phase as a fourth field, consisting of droplets, a liquid base film, and disturbance waves, the method comprises solving individual mass, momentum and energy conservation equations, for said four fields, and solving the necessary closure relations describing the transfer of mass between the said fields, completed by models describing local phenomena including one or many of base film dryout, clad temperature increase, or drop entrainment from waves, wherein the method further comprises:
- simulating steady-state or transient boundary conditions, including any postulated scenarios relevant to BWR operation with respect to the potential appearance and rewetting of dry patches between waves, associated dry time and clad temperature increase, and
- analysing predefined parameters of said disturbance waves and liquid base film, including wave velocity and frequency, and base film thickness.

FIG. 8

EP 4 235 698 A2

**Description**

Technical field

The present disclosure relates to methods for nuclear reactors, and specifically to Boiling Water Reactors (BWR), intended to characterize disturbance waves and base film in coolant water, and specifically to one method adapted to predict crud depositions of relatively high solubility compounds, such as ZnO and $Zn_2SiO_4$, in fuel assemblies, in the annular two-phase flow regime, in particular when induced by transients such as inlet flow fluctuations in BWR fuel assemblies.

Background

In the upper level of fuel assemblies in BWR:s, very dense crud deposits have been recently observed. Crud is a colloquial term for corrosion and wear products (rust particles, etc.) where part of it becomes radioactive (i.e. activated) when exposed to radiation. Mechanisms leading to crud deposition can also potentially lead to fuel performance issues such as spalling, reduced thermal conductivity and even fuel failures and this hence can become a safety concern. The dense crud deposits in the upper level of fuel assemblies were observed in specific fuel assembly locations, and there was no previous experience of this dense crud in earlier cycles or in other, similar, plants.

Thus, the object of the present invention is to achieve a method of simulating and predicting impurity concentration in the annular two-phase flow regime and margin to associated crud deposition threshold in BWR fuel assemblies.

A more general object is to achieve a method of simulating and predicting local mass fluxes and local characteristics of disturbance waves and base film in coolant water of BWR fuel assemblies.

A further object is to design a BWR fuel assembly comprising fuel rods with fuel pellets having enrichment levels determined in dependence of the result of the simulation method in order to avoid crud.

Summary

The above-mentioned objects are achieved by the present invention according to the independent claim.

Preferred embodiments are set forth in the dependent claims.

According to a first aspect, the present invention relates to a computer-implemented simulation method of predicting local concentrations of any impurity constituents in coolant water anywhere along fuel rods within any fuel assembly mechanical design of a Boiling Water Reactor (BWR) potentially resulting in crud deposits on said fuel rods. The simulation method is based on a sub-channel approach of predicting local mass fluxes of vapour and liquid in coolant water anywhere along fuel rods within any fuel assembly mechanical design of a Boiling Water Reactor (BWR) for given steady-state or transient boundary conditions. The sub-channel approach is based on the solution of mass, momentum and energy conservation equations for the vapour phase and the liquid phase. The liquid phase is represented by more than one field variable, and is specifically represented by three fields, with the vapour phase as a fourth field, consisting of droplets, a liquid base film, and disturbance waves. The method comprises solving individual mass, momentum and energy conservation equations, for said four fields, and solving the necessary closure relations describing the transfer of mass between the said fields, completed by mass conservation equations for constituents dissolved in the liquid phase and transported by each of the said fields individually. The method further comprises:

- Simulating steady-state or transient boundary conditions, such as inlet coolant water flow into said fuel assembly. In case of transient simulations, the boundary conditions include input parameters that have predetermined temporal variations.
- Analysing predefined parameters of said disturbance waves and liquid base film, including wave velocity and frequency, and base film thickness.
- Analysing liquid base film between consecutive passing disturbance waves, to calculate local instantaneous impurity concentrations in between disturbance waves during said simulated steady-state or transient operations.

The calculations are made for each fuel rod of the fuel assembly, wherein, for each fuel rod, the method further comprises comparing the calculated local instantaneous impurity concentration to a crud compound precipitation limit, and during the time said concentration is higher than said precipitation limit, crud deposition is considered to have occurred.

According to a second aspect, the present invention relates to a computer-implemented simulation method. The method is based on a sub-channel approach of predicting local mass fluxes of vapour and liquid in coolant water anywhere along fuel rods within any fuel assembly mechanical design of a Boiling Water Reactor (BWR) for given steady-state or transient boundary conditions. The sub-channel approach is based on the solution of mass, momentum and energy conservation equations for the vapour phase and the liquid phase. The liquid phase is represented by more than one field variable, and is specifically represented by three fields, with the vapour phase as a fourth field, consisting of droplets, a liquid base film, and disturbance waves. The method comprises solving individual mass, momentum and energy conservation equations, for said four fields, and solving the necessary closure relations describing the transfer of mass between the said fields, completed by models describing local phenomena such as base film dryout, clad temperature increase or drop entrainment from waves. The method comprises:

- Simulating steady-state or transient boundary conditions, such as any postulated scenarios relevant to BWR operation. In case of transient simulations, the boundary conditions include input parameters that have predetermined temporal variations.
- Analysing predefined parameters of said disturbance waves and liquid base film, including wave velocity and frequency, and base film thickness.

In one embodiment, the step of analysing predefined parameters comprises analysing liquid base film between consecutive passing disturbance waves, to calculate local instantaneous dry patch formation and associated clad temperature increase in between disturbance waves during said simulated steady-state or transient operations. The calculations are made for each fuel rod of the fuel assembly.

In another embodiment, the step of analysing predefined parameters comprises analysing liquid disturbance wave characteristics, to calculate droplet entrainment from the waves during said simulated steady-state or transient operations. The calculations are made for each fuel rod of the fuel assembly.

According to a third aspect, the present invention relates to a Boiling Water Reactor (BWR) comprising fuel assemblies including fuel rods provided with fuel pellets having a $^{235}$U enrichment level. The enrichment level is determined in dependence of the result of simulations performed by the simulation methods defined above, in particular such that crud deposition does not occur under pre-determined boundary conditions.

The present invention is based upon an extensive root cause analysis where it has been established that the crud deposition problem is related to significant fluctuations of fuel assembly inlet coolant water flow. It is also established that the fluctuations have caused thermal-hydraulic propagation through the assembly resulting in enhanced impurity concentration above certain precipitation limits in particular fuel assembly locations. These new phenomena have never been directly addressed before.

The method according to the first aspect of the present invention provides a strategy to solve the problem of crud deposition.

Thus, the purpose of the strategy is to evaluate the risk of crud depositions. There is presently no tool available for taking into account the influence of disturbance waves, in particular under conditions of fast fluctuations in fuel assembly inlet flow. It is suggested to apply the above described method, which is consistent with the root cause analysis, and allows to reduce the risk of crud depositions by modifying the nuclear design, e.g. by modifying the amount of fissile material in the fuel (e.g. the $^{235}$U enrichment) utilized at specified positions of individual fuel rods. Other means of controlling the risk of crud depositions are limiting the power produced by each fuel assembly (by adjusting the core loading pattern, e.g. loading more fresh fuel assemblies), reducing the total core power or reducing reactor water impurity concentrations at the inlet to the fuel assemblies (e.g. by injecting less zinc). Adjusting $^{235}$U enrichment is, however, the preferred approach since it has minimum impact on reactor operation and/or fuel economy.

A new computational tool is thereby developed, which is based on well-known thermal-hydraulic models for BWR fuel. These well-known models are extended with new physical models which include the four-field approach and potential simplifying assumptions.

Some of the well-known computational tools for thermal-hydraulics for BWR fuel analysis comprise:

- Reactor physics codes (e.g. POLCA; Westinghouse's state-of-the-art code for BWR core design and safety analysis) using 1-D per assembly, which is not adequate herein due to the global approach, as no thermal-hydraulics differences between individual fuel rods are considered in these core design codes.
- Sub-channel analysis codes (e.g. MEFISTO-T; Westinghouse's transient three-field sub-channel analysis code) using 1-D at the sub-channel level. These thermal-hydraulics sub-channel analysis codes are adequate herein, as they apply a local approach.
- Computational Fluid Dynamics (CFD) codes being increasingly used in nuclear reactor safety analyses as a tool that enables safety relevant phenomena occurring in the reactor coolant system. CFD codes provide full (high-resolution) 3-D, but are not adequate herein because of limited state-of-the-art for BWR fuel applications.

In thermal-hydraulic analyses, the term sub-channel is conventionally defined by the space in-between fuel rods in a fuel assembly. Often the space between three or four neighbouring fuel rods define a sub-channel. Boundary conditions (such as inlet coolant water flow) is applied into each so defined sub-channels. Also, the interactions between sub-channels are taken into account.

Furthermore, the thermal-hydraulics of BWR fuel assembly is simulated by the code, where a basic assumption is that coolant water transports heat away from the core. The coolant water is subcooled at the inlet and typically has an annular two-phase (steam and liquid) flow at the outlet.

In a standard sub-channel analysis approach, a 1D, two-phase, three-field approach is applied. The three-field approach comprises analysing steam, liquid droplets, and liquid film by applying separate conservation equations for all fields, which includes mass, momentum and energy exchanges between the fields. Mass, momentum and energy exchanges between sub-channels are also calculated in order to simulate the radial interactions across the fuel lattice.

The above may be calculated by applying state-of-the-art models, which are well documented in publicly available disclosures, and e.g. implemented in above-mentioned Westinghouse code MEFISTO-T, or in several other codes from the industry and academia (e.g. COBRA-TF).

According to the first aspect of the present invention, a set of models is defined to address the crud deposition problem, and these models are based upon further development of the above-mentioned state-of-the-art models.

A disturbance wave model is thereby developed, and implemented, based on an extension of the three-field model into a four-field model in a sub-channel analysis code, to enable the computation of the detailed distribution of impurity concentration within each liquid base film flowing along the rods of the fuel assembly under operating conditions of interest, e.g. pressure, flow, power, fuel rod power distribution, including during transient operation.

A local instantaneous impurity model is also further developed and added to the first model to calculate the local instantaneous impurity concentration within the base liquid film in between disturbance waves during steady-state and transient operation, such as inlet flow fluctuations. During the time in which the local instantaneous impurity concentration is higher than a predetermined crud compound precipitation limit, crud deposition is considered to occur.

The above two models are based on physical phenomena consistent with the performed root cause analysis.

This new tool is used to avoid undesired crud deposition in BWR fuel assemblies in annular two-phase flow under expected plant operating conditions by locally adjusting the rod power (via $^{235}$U enrichment) for any lattice geometry.

## Brief description of the drawings

Figure 1 is a schematic illustration of a cross-section steam/liquid annular two-phase flow along a fuel rod.

Figure 2 is a schematic illustration of a cross-section steam/liquid annular two-phase flow along a fuel rod illustrating some aspects of the present invention.

Figure 3 is a schematic perspective view of a fuel assembly where the method according to the present invention is applied.

Figure 4 is a schematic cross-sectional view of a fuel assembly, which include the representation of various sub-channels.

Figures 5 and 6 show graphs illustrating results of the local instantaneous impurity concentration simulation.

Figure 7 is a flow diagram illustrating a method according to a first aspect of the present invention.

Figure 8 is a flow diagram illustrating a method according to a second aspect of the present invention.

## Detailed description

The computer-based simulation methods will now be described in detail with references to the appended figures. Throughout the figures the same, or similar, items have the same reference signs. Moreover, the items and the figures are not necessarily to scale, emphasis instead being placed upon illustrating the principles of the invention.

Initially, a background of available calculation tools and models will be given.

Modelling and validation of two-phase with three-field sub-channel analysis codes (e.g. MEFISTO-T) for the prediction of two-phase flow, up to critical power where so-called dryout occurs, in BWR fuel assemblies is previously known, and publicly available, and has been developed and applied by the applicant.

Westinghouse has developed the MEFISTO-T code with the main goal to achieve fast, robust, practical and reliable predictions of steady-state and transient dryout power in Boiling Water Reactor (BWR) fuel assemblies based on a mechanistic approach. A computationally efficient simulation scheme is used to achieve this goal, where the code resolves all relevant field (drop, steam and multi-film) mass balance equations, within the annular flow region, at the sub-channel level while relying on a fast and robust two-phase (liquid/steam) sub-channel solution to provide the cross-flow information. The MEFISTO-T code can hence provide highly detailed solutions of the multi-film flow in BWR fuel assemblies while enhancing flexibility and reducing the computer time by an order of magnitude as compared to a standard three-field sub-channel analysis approach. Models for the numerical computation of the one-dimensional field flowrate distributions in an open channel (i.e. a sub-channel), including the numerical treatment of field cross-flows, part-length rods, spacers grids and post-dryout conditions are included in the code. The MEFISTO-T code is then applied to dryout predictions in BWR fuel assemblies using the VIPRE-W code as a fast and robust two-phase sub-channel driver code. The dryout power is numerically predicted by iterating on the assembly power so that the minimum film flowrate in the assembly reaches the predetermined dryout criteria. Predicted dryout powers (including trends with flow, pressure, inlet subcooling conditions and power distribution) and predicted dryout locations (both axial and radial) are compared to experimental results, using available dryout databases, and are shown to yield excellent results.

The MEFISTO-T code applied to dryout predications is discussed e.g. in "Modeling and validation of a mechanistic tool (MEFISTO) for the prediction of critical power in BWR fuel assemblies" by Adamsson, Carl; Le Corre, Jean-Marie, published 2011 in "Nuclear Engineering and Design"; ISSN 0029-5493; Worldcat; CODEN NEDEAU; v. 241(8); p. 2843-2858.

The MEFISTO-T code is based on a simplified approach to sub-channel film-flow analysis whereby the sub-channel transport equations for the liquid films are decoupled from each other. The approach allows fast and robust simulation with high axial resolution of BWR steady-state operation and realistic transients. The code has been successfully validated against experimental data under both steady state conditions and transient conditions involving realistic variations of flow and power and three different axial power distributions, at conditions typical during BWR operation.

Semi-empirical dryout correlations are commonly used to predict the dryout power in BWR fuel rod assemblies under both steady-state and transient conditions. Even though these correlations can be based on mechanistic features, they are still essentially empirical and require the use of an extensive and fuel-specific critical power database to be developed. By contrast, mechanistic methods based on sub-channel annular two-phase flow modelling, such as in MEFISTO-T code, have the potential for accurate dryout prediction capabilities outside the correlation development database.

To summarize, MEFISTO-T is a sub-channel analysis code developed at Westinghouse with the main purpose to predict film flow distributions on every fuel rod during steady-state and transient operations. The code is based on a one-dimensional three-field approach where liquid film, liquid droplets and vapour are considered in every sub-channel. MEFISTO-T relies on a simplified two-phase flow model (VIPREW) to calculate the time-dependent distribution of flow and enthalpy in every sub-channel, before applying the three-field approach from onset of annular flow to assembly outlet, in all or selected sub-channels.

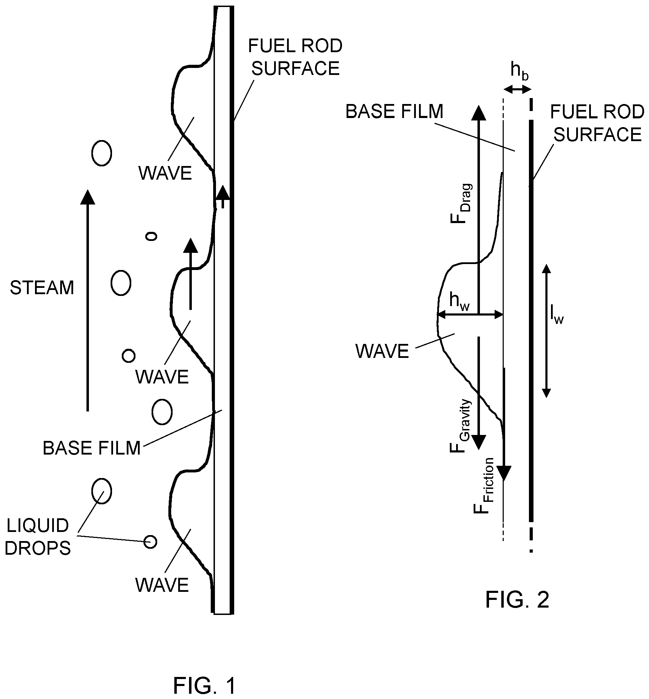

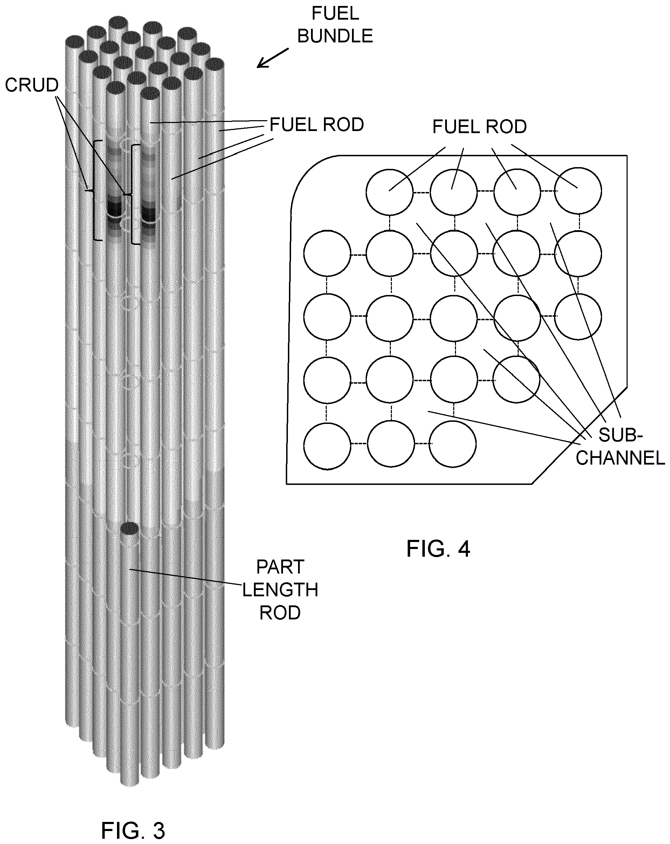

Generally, the simulation methods according to the present invention comprise extending the three-field approach to a four-field approach, wherein the liquid film on each fuel rod in the four-field approach is divided into fast moving disturbance waves on top of slowly moving liquid base films. This is schematically illustrated in figures 1 and 2. The simulation methods are based upon a sub-channel mechanistic model using a transient three-field (steam, liquid drops, liquid film) approach including couplings between sub-channels defined between said fuel rods. This mechanistic model is e.g. the abovediscussed MEFISTO-T code. A cross-sectional view of a fuel assembly is shown in figure 4 where some of the sub-channels are indicated.

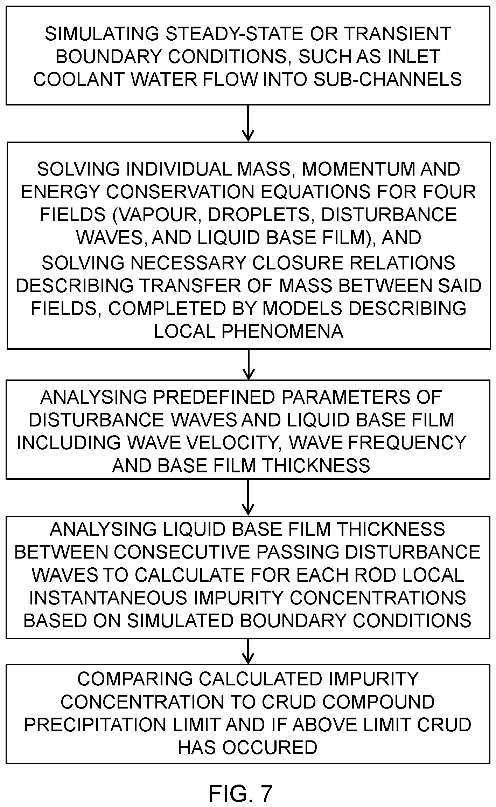

The present invention relates to a first computer-implemented simulation method of predicting local concentrations of constituents in coolant water anywhere along fuel rods within any fuel assembly mechanical design of a Boiling Water Reactor (BWR) potentially resulting in crud deposits on said fuel rods. The first method will now be described in detail, and in particular with references to the flow diagram shown in figure 7.

The method is based on a sub-channel approach of predicting local mass fluxes of vapour and liquid in coolant water anywhere along fuel rods within any fuel assembly mechanical design of a Boiling Water Reactor (BWR) for given steady-state or transient boundary conditions. The sub-channel approach is based on the solution of mass, momentum and energy conservation equations for the vapour phase and the liquid phase, where the liquid phase is represented by more than one field variable, and is specifically represented by three fields, with the vapour phase as a fourth field, consisting of droplets, a liquid base film, and disturbance waves.

The method comprises solving individual mass, momentum and energy conservation equations, for the four fields, and solving the necessary closure relations describing the transfer of mass between the said fields, completed by mass conservation equations for constituents dissolved in the liquid phase and transported by each of the said fields individually.

The method comprises:

- Simulating steady-state or transient boundary conditions for the condition of interest to the fuel assembly, such as inlet coolant water flow into said sub-channels (the coolant water flow may have a predetermined flow velocity variation), temperature, pressure, rod power distribution, and assembly power.
- Analysing predefined parameters of said disturbance waves and base film, including wave velocity and frequency, base film thickness, etc. based upon the interaction between the disturbance waves, the liquid base film, the liquid drops and the vapor.
- Analysing liquid base film thickness between consecutive passing disturbance waves, to calculate local instantaneous impurity concentrations based on said simulated boundary conditions.

The calculation is made for each fuel rod of the fuel assembly and includes thermal-hydraulics couplings between sub-channels. For each fuel rod, the method further comprises comparing said calculated local instantaneous impurity concentration to a crud compound precipitation limit, and during the time said concentration is higher than said precipitation limit, crud is considered to have occurred.

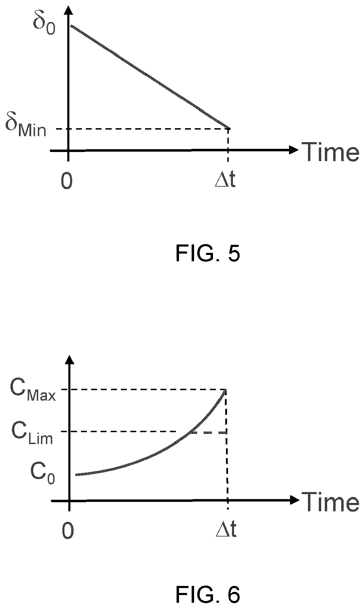

Figure 6 shows a graph illustrating how impurity concentration varies between passing disturbance waves.

Figure 3 illustrates a fuel assembly comprising fuel rods. In the figure is indicated portions of two fuel rods where high impurity concentration has been identified. The different grey colours indicate how much impurity concentration is present, where black indicates highest concentration. In the figure, a so-called part length rod is also indicated.

According to one embodiment, the method step of analysing predefined parameters of disturbance waves includes resolving the mass and momentum conservation equations in every considered sub-channels using a four-field approach where the waves and base films are considered separately (also referred as disturbance wave model). This model is coupled to a sub-channel analysis code for the crossflow calculations and some elements of the momentum balance (such as pressure gradient and inertia terms) may be neglected.

According to another embodiment, the method comprises applying impurity mass conservation equations consistent with the four-field conservation equations mentioned above. Based upon the interaction between the waves and liquid base film, the model calculates a detailed distribution of impurity concentrations axially and azimuthally (i.e. along the perimeter of a given fuel rod) within each liquid base film flowing along the fuel rods of the fuel assembly under operating conditions of interest.

According to still another embodiment, the method further comprises applying a local instantaneous impurity concentration model, which is used as a post-process of the base film impurity concentration model, and, for each fuel rod, being configured to calculate said local instantaneous impurity concentration within the slowly moving liquid base film in between disturbance waves during nominal operation and any transients, such as predetermined inlet flow velocity variations.

According to another embodiment, the method further comprises simulating operating conditions of interest by varying the fissile material content (e.g. the $^{235}$U enrichment) of one or several fuel pellets of one or several fuel rods in dependence of the calculated local instantaneous impurity concentration in order to prevent the formation of crud deposits.

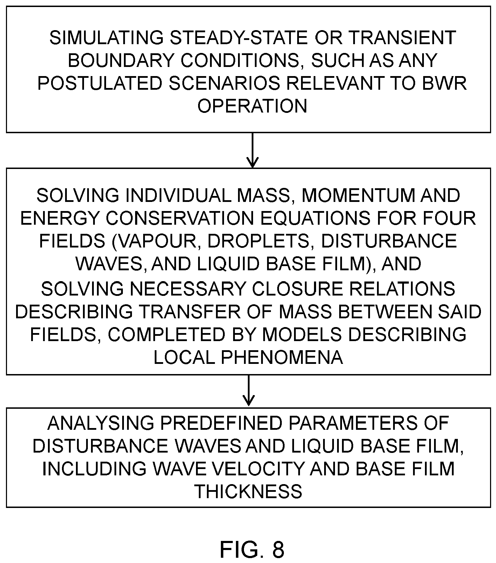

The present invention also relates to a second computer-implemented simulation method, which is schematically illustrated by the flow diagram shown in figure 8.

The second simulation method is based on a sub-channel approach of predicting local mass fluxes of vapour and liquid in coolant water anywhere along fuel rods within any fuel assembly mechanical design of a Boiling Water Reactor (BWR) for given steady-state or transient boundary conditions. The sub-channel approach is based on the solution of mass, momentum and energy conservation equations for the vapour phase and the liquid phase, the liquid phase is represented by more than one field variable, and is specifically represented by three fields, with the vapour phase as a fourth field, consisting of droplets, a liquid base film, and disturbance waves.

The method comprises solving individual mass, momentum and energy conservation equations, for said four fields, and solving the necessary closure relations describing the transfer of mass between the said fields, completed by models describing local phenomena. The method further comprises:

- Simulating steady-state or transient boundary conditions, such as any postulated scenarios relevant to BWR operation.
- Analysing predefined parameters of said disturbance waves and liquid base film, including wave velocity and frequency, and base film thickness.

In one embodiment, the method step of analysing predefined parameters comprises analysing liquid base film between consecutive passing disturbance waves, to calculate, for each fuel rod of the fuel assembly, local instantaneous dry patch formation and associated clad temperature increase in between disturbance waves during said simulated steady-state or transient operations.

In another embodiment, the method step of analysing predefined parameters comprises analysing liquid disturbance wave characteristics, to calculate, for each fuel rod of the fuel assembly, droplet entrainment from the waves during said simulated steady-state or transient operations.

According to still another embodiment, in case of simulating transient boundary conditions, the boundary conditions include input parameters having predetermined temporal variations.

Preferably, the local phenomena are base film dryout, clad temperature increase, and/or drop entrainment from waves.

Thus, the second simulation method could be applied to any steady-state, transients and postulated scenarios relevant to BWR operation with respect to the potential appearance and rewetting of dry patches (between waves),

associated dry time and clad temperature increase. The appearance of dry patches is derived from a local, instantaneous, consideration of the liquid base film during the time between two consecutive disturbance waves, including exchange terms with the steam and drop fields. In addition, the second method could be further extended to calculate the amount of droplet entrained from the liquid film. The droplet entrainment is closely related to the wave characteristics and can be calculated from the consideration of wave geometrical dimensions, mass and momentum derived from the four-field approach.

The present invention also relates to a Boiling Water Reactor (BWR) comprising fuel assemblies including fuel rods provided with fuel pellets having a $^{235}$U enrichment level.

The enrichment level is determined in dependence of the result of simulations performed by the above described simulation methods.

For example, the simulation method may be applied to determine enrichment levels required to make the next-to-corner rods equally susceptible to crud deposition as all other rods in the fuel assembly.

By generally applying the present invention, a $^{235}$U optimization, involving the local concentration of crud constituents, may be reached in the nuclear design process, in a similar manner as already existing design criteria.

As discussed above, the present invention is based upon new advanced features and is implemented by two newly-developed models, a disturbance wave model, and an impurity concentration model.

The disturbance wave model applies a 1D, two-phase, four-field approach. The fields of a commonly applied three-field approach comprise steam, liquid droplets, and a liquid film. In the four-field approach, the liquid film is further divided into liquid disturbance waves and a liquid base film. Thus, the four fields are steam, liquid droplets, liquid disturbance waves and a liquid base film. This is schematically illustrated in figure 1.

Because of the mass, momentum and energy exchanges between disturbance waves and base film, there is a need for new constitutive models and field exchange terms.

The impurity concentration model is calculated in all considered fields by applying additional impurity conservation equations for all fields. This is similar to the mass conservation equations already utilized in the sub-channel code, but with different exchanges between fields (since impurities are not transported to the steam field).

These newly developed models will now be discussed more in detail.

The disturbance wave model is based upon the following assumptions and is illustrated by figure 2.

The four fields comprise very fast moving steam, liquid droplets, fast moving waves that tend to be coherent and transport most of the film mass, and a slow moving liquid base film that is very thin and contributes much less to the liquid film mass transport.

Transient field conservation equations are resolved, and below is one example of a liquid film momentum balance equation in a three-field approach:

$$\frac{\partial}{\partial t} W_f + \frac{\partial}{\partial z}\left(u_f W_f\right)=$$
$$\Pi\left(u_d D - u_f E - u_f \Gamma\right) + u_f w_f - \Pi h_f\left(\frac{\partial p}{\partial z} + g\rho_l\right) + \Pi(\tau_v - \tau_{wall})$$

The left-hand side of the equation represents the inertia terms and the right-hand side of the equation represents (in order), the momentum transported by drop deposition, entrainment, evaporation and crossflow, the pressure gradient, the gravity and the interfacial forces (from vapour and wall).

Following the same approach in the new four-field formulation, with reference to figure 2, where various parameters are shown, it is possible to establish an equation representing wave momentum conservation and base film momentum conservation. The wave momentum conservation is written below:

$$\frac{\partial}{\partial t} W_w + \frac{\partial}{\partial z}\left(u_w W_w\right)$$
$$= \Pi(u_d D_w - u_w E - u_w \Psi_w + u_b \Psi_b) + u_w w_w - \Pi h_w\left(\frac{\partial p}{\partial z} + g\rho_l\right)$$
$$+ \Pi\left(\tau_{v/w} - \tau_{w/b}\right)$$

In practice, some simplifications can be made whenever justified. For instance, in the specific case where steam/drop/wave/base film momentum transfer from mass exchanges, pressure gradient and inertia terms can be neglected, we get:

$$h_w g \rho_l + \left( \tau_{v/w} - \tau_{w/b} \right) = 0$$

Below is a list showing what the parameters of the above equations stand for:

W: Mass flowrate
w: Mass flowrate in crossflow
u: Velocity
D: Drop deposition mass flux (to film)
E: Drop entrainment mass flux (from film)
Γ: Evaporation mass flux (from film)
Ψ: Wave/base film mass flux
Π: Wall perimeter
p: Pressure
ρ: Density
h: Thickness
τ: Interfacial force (per unit area)
t: Time
z: Axial elevation

Subscripts:

w: wave
f: film
d: drop
l: liquid
v: vapor
b: base film

In figure 2, the resulting forces on the waves are schematically indicated by arrows in the simple case depicted by the previous equation. A force balance is achieved by gravity forces, steam drag and wave to base film momentum transfer ("friction").

$$F_{Gravity} + F_{Drag} + F_{Friction} = 0$$

which is solved with regard to wave velocity.

In order to complete the system of equations, it is required to have constitutive models, e.g. for the interfacial forces between fields in particular: wave drag force, and the wave to base film force. These constitutive modes can be based on physical considerations or empirical correlations (when a suitable experimental database is available).

Additional inputs are also required to sufficiently describe the average wave and base film geometrical characteristics locally. While the choices may differ depending on the method, these inputs would typically include the wave amplitude ($h_w$), width ($l_w$), and base liquid film thickness ($h_b$). These may also be obtained by physical considerations and/or calibrated empirical correlations (when a suitable experimental database is available).

The equations are then solved for wave mass flow and wave velocities. The wave frequency is determined from consistency with the wave mass and momentum conservation equations.

Below is shown four examples of calibrated empirical correlations. Different correlations may be developed as more relevant data becomes available. These are determined by using data from publicly available experimental databases at relevant BWR core conditions. The correlations were derived using regression analysis, specifically performed for the four-field model. Regression analysis is a powerful statistical method that allows to examine the relationship between two or more variables of interest. While there are many types of regression analysis, at their core they all examine the influence of one or more independent variables on a dependent variable.

Equilibrium base film thickness:

$$\frac{h_b}{d_H} = 5.37 \cdot 10^{-5} \cdot Re_v^{-0.64} \cdot Re_f^{1.21}$$

Wave amplitude:

$$\frac{h_w}{d_H} = 3.21 \cdot 10^{-3} \cdot Re_v^{-0.86} \cdot Re_w^{1.35}$$

Wave width:

$$\frac{l_w}{d_H} = (5.20 \cdot 10^5 / Re_v)^{0.63}$$

Wave drag coefficient:

$$C_W = \left(\frac{1.73 \cdot 10^5}{Re_{vw}}\right)^2 + 0.22$$

Below is a list showing what the parameters of the above equations stand for:

$h_b$: Base film thickness
$h_w$: Wave amplitude
$l_w$: Wave (axial) width
$C_w$: Wave drag coefficient
dH: Equivalent hydraulic diameter (4A/P)
$d_A$: Equivalent circular area diameter (sqrt(4A/$\pi$)
$Re_v$: Vapor Reynolds number ($\rho_v$*$u_v$*dA/$\mu_v$)
$Re_{vw}$: Vapor Reynolds number with respect to wave velocity ($\rho_v$*($u_v$-$u_w$)*dA/$\mu_v$)
$Re_\varepsilon$: Film Reynolds number (4*$M_f$/$\Pi$/$\mu_f$)
$Re_w$: Wave Reynolds number (4*$M_w$/$\Pi$/$\mu_f$)

The Reynolds number (Re) is an important dimensionless quantity in fluid mechanics typically used to help predict flow patterns in different fluid flow situations. At low Reynolds numbers, flows tend to be dominated by laminar (sheet-like) flow, while at high Reynolds numbers turbulence results from differences in the speed and direction of the fluid.

Because the calibrated correlations were derived from data under equilibrium conditions (thermal and mechanical), model relaxations are applied in the model to allow the geometrical characteristics of the waves to smoothly transition from one state to the other. The relaxations characterizes the rate at which the wave can exchange mass with the base film and the rate at which the wave characteristics can change, consistent with experimental observations.

The model is implemented in MEFISTO-T and the wave and base film geometrical characteristic correlations are calibrated against the RISO database. It has been tested for simple flow transients such as Fukano transients.

The RISO database is a publicly available high-pressure steam/water database made available by the Department of Reactor Technology at the Riso National laboratory, Denmark, in 1978.

Würtz, J. (1978). An experimental and theoretical investigation of annular steam-water flow in tubes and annuli at 30 to 90 bar. (Denmark. Forskningscenter Risoe. Risoe-R; No. 372).

Measurements were presented of film flow rates, pressure gradients, film thicknesses, wave frequencies and velocities, and burnout (dryout) heat fluxes in one annular and two tubular geometries. The more than 250 experiments were performed with steam-water at 30 to 90 bar under both adiabatic and diabatic conditions.

The transient experimental experiments performed by Fukano are available in T. Fukano, S. Mori, T. Nakagawa (2003). Fluctuation characteristics of heating surface temperature near an obstacle in transient boiling two-phase flow in a vertical annular channel. Nuclear Engineering and Design 219 (2003) 47-60.

In these low-pressure, steam-water tests in a heated annulus, fast variations in input power, inlet enthalpy and inlet flow were performed, while the dynamic behavior of the disturbance waves were visually observed near the test section outlet. Long suppression (delay) of disturbance waves could be observed under specific transients, associated with large wall temperature variations corresponding to the complete dryout of the base film in between disturbance waves.

The impurity concentration model will now be described using the concept of impurity mass conservation in all fields. The steam is created through an evaporation process and is not considered to transport any impurity.

An example of impurity concentration calculation is provided, applicable to the three-field approach

Film:

$$\frac{\partial}{\partial t}\left(C_f \frac{w_f}{u_f}\right) + \frac{\partial}{\partial z}\left(C_f \cdot W_f\right) = \Pi \cdot \left(C_d \cdot D - C_f \cdot E\right) + C_f^{CF} w_f^{CF}$$

Drop:

$$\frac{\partial}{\partial t}\left(C_d \frac{w_d}{u_d}\right) + \frac{\partial}{\partial z}\left(C_d \cdot W_d\right) = -\Pi \cdot \left(C_d \cdot D - C_f \cdot E\right) + C_d^{CF} w_d^{CF}$$

Steam:    No impurities considered.

In the equations above C stands for impurity concentration, superscript CF stands for cross-flow between sub-channels, and subscript f and d stand for film and drop, respectively.

The same concept applies to the four-field approach where the impurity concentration is written consistently with the mass conservation, including the mass exchange between the considered fields.

In a second step, the local, instantaneous, concentration in the base film between waves is calculated by using input parameters ($\Delta t$, $\delta_0$, $C_0$) from the four-field approach. In figures 5 and 6 the base film thickness, and the base film concentration are illustrated, respectively.

Figure 5 shows how the base film thickness varies over time at a specified location in between disturbance waves. At t=0 (immediately after a wave), the base film thickness has its maximum value $\delta_0$ and at t=$\Delta t$ (corresponding to the wave period) the thickness is at its minimum, $\delta_{Min}$. The line defining the base film thickness variation is mainly governed by the evaporation process.

$\delta$: Instantaneous base film thickness

$\Delta t$: Wave period

Subscripts: 0: Initial; LIM: Limit of impurity precipitation

Figure 6 shows how the base film concentration varies over time. At t=0, the concentration is at its minimum $C_0$ and at t=$\Delta t$ at its hypothetical maximum $C_{Max}$ (when precipitation is disregarded), mainly governed by the base film thinning. A concentration limit value $C_{Lim}$ is determined to a value where crud deposition starts.

To determine the crud deposition limit value $C_{Lim}$, plant-specific information is required. According to one example $C_{Inlet}$=15.6 ppb, and $C_{LIM}$=10*$C_{Inlet}$.

Solubility limits are used as thresholds to translate local concentrations in fuel rod coolant film into a crud deposition mass flux. The crud depositions may thereby be modelled as a simple threshold phenomenon. Using a sub-channel analysis approach, the new modelling capability can accurately predict the relative levels of local film concentration and crud deposition mass flux axially and azimuthally on the different rods, without significantly relying on modelling assumptions.

The model has been validated against inspection data from an operating BWR.

The key parameters affecting the margin to crud deposition are:

Local heat flux; local wave frequency; local base film thickness, and constituents' bulk concentration. The first three parameters can be controlled by optimizing nuclear design, i.e. by optimizing the axial enrichment variation in the rods predicted to be most susceptible to crud.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A computer-implemented simulation method, based on a sub-channel approach of predicting local mass fluxes of vapour and liquid in coolant water anywhere along fuel rods within any fuel assembly mechanical design of a Boiling Water Reactor, $\text{(BWR)}$, for given steady-state or transient boundary conditions, the sub-channel approach is based on the solution of mass, momentum and energy conservation equations for the vapour phase and the liquid phase, the liquid phase is represented by more than one field variable, and is specifically represented by three fields, with the vapour phase as a fourth field, consisting of droplets, a liquid base film, and disturbance waves, the method comprises solving individual mass, momentum and energy conservation equations, for said four fields, and solving the necessary closure relations describing the transfer of mass between the said fields, completed by models describing local phenomena including one or many of base film dryout, clad temperature increase, or drop entrainment from waves, wherein the method further comprises:

- simulating steady-state or transient boundary conditions, including any postulated scenarios relevant to BWR operation with respect to the potential appearance and rewetting of dry patches between waves, associated dry time and clad temperature increase, and
- analysing predefined parameters of said disturbance waves and liquid base film, including wave velocity and frequency, and base film thickness.

2. The method according to claim 1, wherein analysing predefined parameters comprises analysing liquid base film between consecutive passing disturbance waves, to calculate local instantaneous dry patch formation and associated clad temperature increase in between disturbance waves during said simulated steady-state or transient operations, and wherein said calculations are made for each fuel rod of the fuel assembly.

3. The method according to claim 1 or 2, wherein analysing predefined parameters comprises analysing liquid disturbance wave characteristics, to calculate droplet entrainment from the waves during said simulated steady-state or transient operations, and wherein said calculations are made for each fuel rod of the fuel assembly.

4. The method according to any of claims 1-3, wherein in case of simulating transient boundary conditions, the boundary conditions include input parameters having predetermined temporal variations.

FIG. 1

FIG. 2

FIG. 3

FIG. 4

FIG. 5

FIG. 6

SIMULATING STEADY-STATE OR TRANSIENT BOUNDARY CONDITIONS, SUCH AS INLET COOLANT WATER FLOW INTO SUB-CHANNELS

SOLVING INDIVIDUAL MASS, MOMENTUM AND ENERGY CONSERVATION EQUATIONS FOR FOUR FIELDS (VAPOUR, DROPLETS, DISTURBANCE WAVES, AND LIQUID BASE FILM), AND SOLVING NECESSARY CLOSURE RELATIONS DESCRIBING TRANSFER OF MASS BETWEEN SAID FIELDS, COMPLETED BY MODELS DESCRIBING LOCAL PHENOMENA

ANALYSING PREDEFINED PARAMETERS OF DISTURBANCE WAVES AND LIQUID BASE FILM INCLUDING WAVE VELOCITY, WAVE FREQUENCY AND BASE FILM THICKNESS

ANALYSING LIQUID BASE FILM THICKNESS BETWEEN CONSECUTIVE PASSING DISTURBANCE WAVES TO CALCULATE FOR EACH ROD LOCAL INSTANTANEOUS IMPURITY CONCENTRATIONS BASED ON SIMULATED BOUNDARY CONDITIONS

COMPARING CALCULATED IMPURITY CONCENTRATION TO CRUD COMPOUND PRECIPITATION LIMIT AND IF ABOVE LIMIT CRUD HAS OCCURED

FIG. 7

SIMULATING STEADY-STATE OR TRANSIENT BOUNDARY CONDITIONS, SUCH AS ANY POSTULATED SCENARIOS RELEVANT TO BWR OPERATION

SOLVING INDIVIDUAL MASS, MOMENTUM AND ENERGY CONSERVATION EQUATIONS FOR FOUR FIELDS (VAPOUR, DROPLETS, DISTURBANCE WAVES, AND LIQUID BASE FILM), AND SOLVING NECESSARY CLOSURE RELATIONS DESCRIBING TRANSFER OF MASS BETWEEN SAID FIELDS, COMPLETED BY MODELS DESCRIBING LOCAL PHENOMENA

ANALYSING PREDEFINED PARAMETERS OF DISTURBANCE WAVES AND LIQUID BASE FILM, INCLUDING WAVE VELOCITY AND BASE FILM THICKNESS

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Modeling and validation of a mechanistic tool (MEFISTO) for the prediction of critical power in BWR fuel assemblies. **ADAMSSON, CARL ; LE CORRE, JEAN-MARIE.** Nuclear Engineering and Design. Worldcat, 2011, vol. 241, 2843-2858
- **WÜRTZ, J.** An experimental and theoretical investigation of annular steam-water flow in tubes and annuli at 30 to 90 bar. Forskningscenter Risoe, 1978
- **T. FUKANO ; S. MORI ; T. NAKAGAWA.** Fluctuation characteristics of heating surface temperature near an obstacle in transient boiling two-phase flow in a vertical annular channel. *Nuclear Engineering and Design,* 2003, vol. 219, 47-60